# EUROPEAN PATENT SPECIFICATION

(11) **EP 1 033 075 B1**
(45) Date of publication and mention of the grant of the patent: **02.01.2002**
(21) Application number: 99830110.5
(22) Date of filing: 02.03.1999
(51) Int. Cl.: A01K 27/00

(54) **Harness for domestic animals**
Führungsgurt für Haustiere.
Harnais pour animaux domestiques

(43) Date of publication of application: 06.09.2000
(60) Divisional application: 00202049.3
(73) Proprietor: L.A.C. di Albertengo & C. SNC, 10060 S. Secondo di Pinerolo (Torino) (IT)
(72) Inventor: Franco, Andreino, 10060 Roletto (Torino) (IT); Bocchiardo, Livio, 10064 Pinerolo (Torino) (IT)
(74) Representative: Robba, Pierpaolo

(56) References cited:
- EP-A- 0 612 467
- US-A- 5 247 905

## Description

The present invention relates to a harness or breast collar for attaching a leash to a domestic animal or pet such as a dog.

More particularly, the invention concerns a harness of the type comprising a first strap portion extending under the animal belly, a second strap portion extending under the animal neck, and an upper strap portion joining together the ends of such straps, generally in a releasable manner, thus providing an anchoring point for attaching the leash.

As it is known harnesses or breast collars are generally assembled by joining together portions of leather or nylon straps by means of fasteners such as for example rings, plates or clips made of metal or plastic.

These harnesses are built with different dimensions to fit dogs of different size, and generally comprise systems for adjusting the length of the straps for properly fitting the harness to a given animal for preventing the animal from accidentally getting free without unduly limiting the animal movements with a too tight harness.

A known adjustable animal harness is disclosed in US 5,247,905. The disclosed harness comprises a belly or body strap and a front strap the ends of which are joined together by metal plates provided with slits, a lower strap to be located between the animal legs and connecting the belly strap with the front strap, and an upper connecting member joining said two connecting plates and provided with a ring for the attachment of a leash.

Both the lengths of the belly and the front straps can be adjusted. To this aim each strap is provided at one end with a strap adjustment system having a slidably movable buckle for folding back a portion of the strap in order to shorten its length.

Such adjustment system is asymmetric since the length of a strap can be adjusted only at one of its ends and as a consequence of either a shortening or a lengthening operation, the lower connecting strap moves out from the optimum position that is centred between the animal legs.

On this account in the known harnesses of this type the lower connecting strap that joins the belly strap with the front strap is not fixed, but rather is free to slide along the straps to which it is connected.

Apparently this trick solves the above mentioned problem, but nevertheless it brings about other inconveniences. Namely when the harness is fitted to a dog, the connecting strap can be wrongly positioned, for example laterally displaced, thus either slowing down the harness application, or negatively affecting a proper fitting, and therefore the harness safety, if the user does not realise the wrong position of the strap.

Document EP 0 612 467 discloses a leash-controllable dog harness comprising a junction to which a leash is attachable and a pair of flexible loops depending from the junction and joined thereto at an angle to each other, the loops when the harness is installed crossing over at a crossover site against the chest of the dog at a position well above the forelegs. The loops are angled about 45 degrees with respect to each other so that the loops cross each other at the crossover site. 'The loops may be stitched together at this site. Each loop is closed by means of a plastic side release buckle having a female socket joined to the junction and a'male plug joined to the free end of the loop. In order to accommodate the harness to a dog of particular size, each side of each loop is provided with length adjusting means. To effect a torso size fit it is necessary to adjust one side of each loop, while in order to effect a chest size adjustment the length of the opposite side of each loop is adjusted.

A first object of the present invention is therefore to realise a harness provided with a symmetric and particularly safe adjustment device.

Another object of the present invention is to provide a harness that can be manufactured easily and at low cost.

The above objects of the present invention are accomplished through a harness as claimed in the attached claims. According to the invention the harness is equipped with a symmetric adjustment device provided on both sides thereof for reliably accommodating dogs of different size.

Thanks to such double adjustment device, the harness of the invention has improved safety characteristics when compared with the prior art articles. Moreover thanks to the fixed lower connecting strap, all the straps that are in contact with the dog body can be covered with a soft or padded material for an improved comfort of use.

The above objects will become evident from the following detailed description of preferred embodiments of the harness according to the invention, with particular reference to the attached drawings in which:
Fig. 1 is an overall view of a harness according to the invention;

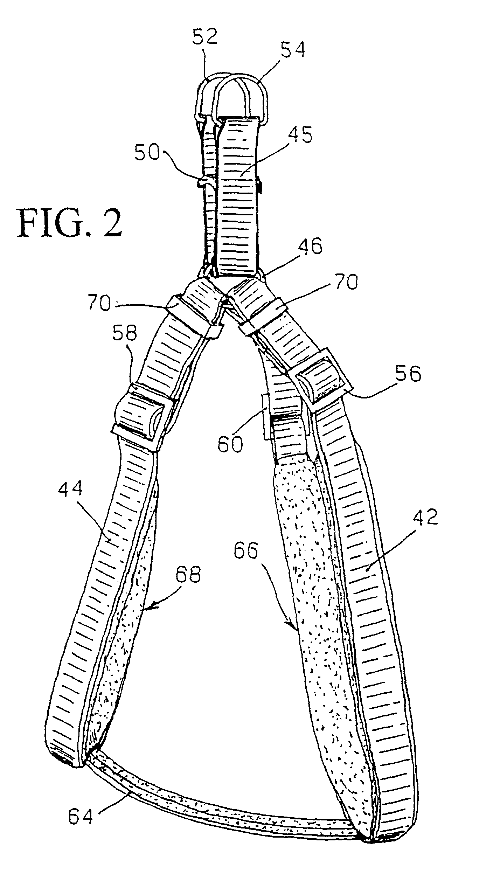

Fig. 2 is a SIDE view of the harness of Fig. 1.

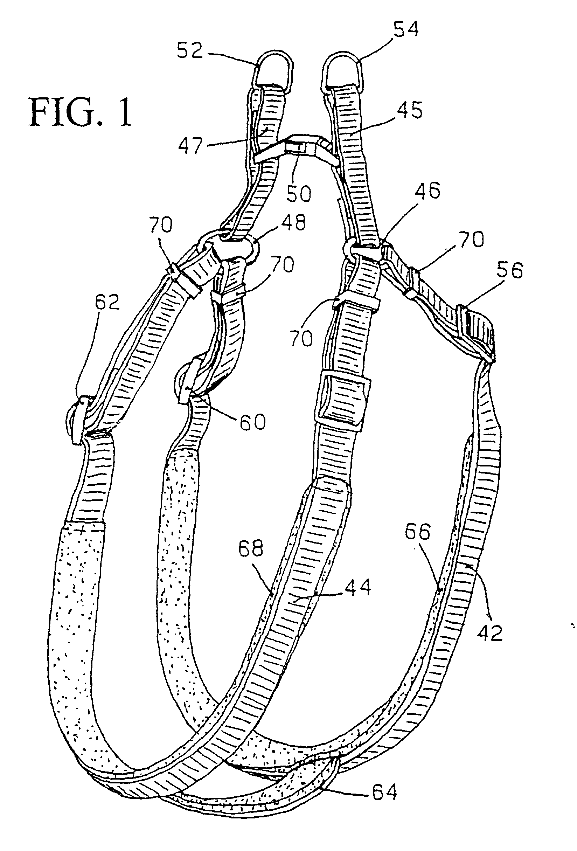

With reference to Fig. 1 a harness according to the invention comprises a belly or body strap portion 42 to be positioned under the animal belly 'and a front strap portion 44 extending along the front area of the neck, such straps being joined to each other at their ends by side connecting means or members 46, 48, a lower connecting strap portion 64 for joining the belly strap 42 to the front strap 44, and two upper straps 45, 47. One end of each of straps 45, 47 is connected to one of the side connecting means 46, 48, whereas a first and a second portion of a releasable clip 50 that closes the harness over the animal back are engaged in a respective one of straps 45, 47. The other ends of straps 45, 47 are respectively connected with two rings 52, 54 to which a leash can be attached.

The straps forming the harness can be made of leather, braided nylon or other similar materials.

The symmetrical adjustment of the harness size is achieved by providing a length-adjustment device on both the belly strap 42 and the front strap 44. At each strap end, the two straps 42 and 44 are provided with a length-adjustment device equipped with a slidably movable buckle.

The ends of each strap portion thread the corresponding connecting side rings 46, 48 and are secured to corresponding slidably movable buckles 56, 58, 60, 62 so that their lengths can be adjusted as desired. Four flat plastic rings 70 of rectangular shape maintain taut the strap portion that has been folded.

Thanks to the double-adjustment feature provided on each strap portion, both strap portions can be lengthened or shortened while always maintaining the padded central portion 66, 68 of each strap centred with respect to the animal belly.

In fact the inner sides of the central portions of the belly strap 42 and the front strap 44 are completely covered with a soft material allowing the perspiration. Such covering renders the harness more comfortable and further imparts a certain degree of rigidity that makes easier both the application and the removal of the harness.

Moreover, since the length adjustment system is completely symmetrical, i.e. a device provided on both sides, the lower connecting strap 64 can be sewn, heat-bonded or otherwise secured to the central portions of the belly and front straps. This way the lower connecting strap 64 is always optimally located, i.e. centrally with respect to the animal legs, and its inside surfaces can be covered with the same material used for covering the belly and front straps.

Furthermore it is not required any adjustment of the two upper straps 45, 47 connecting the side rings 46, 48 to the two rings 52, 54 for attaching the leash. The same applies also to the clip 50 that closes the harness over the animal back. Namely the lengths of the upper straps 45, 47 are fixed and the two portions of clip 50 are secured at an intermediate position between the side rings 46, 48 and the upper rings 52, 54.

## Claims

1. A animal harness of the type comprising:
a belly strap (42) surrounding the animal belly,
a front strap (44) surrounding the neck front area, the ends of said belly (42) and front (44) straps being joined to each other through side connecting means (46, 48),
a pair of upper straps (45, 47) adapted to connect said side connecting means (46, 48) with a first and a second portions of a releasable clip (50) for closing the harness over the animal back and with at least a ring (52, 54) for attaching a leash,
**characterised in that** the belly strap (42) and front strap (44) are provided at both ends with length-adjusting means for changing the harness size and adjust it to animals of different sizes, and **in that** said belly strap (42) and said front strap (44) are joined at their central parts by a fixed spacing strap (64).

2. A harness as claimed in claim 1, wherein in each length adjustment means the strap slidably passes through an opening in the corresponding side connecting means (46, 48) and the free end of the strap is secured to a buckle (56, 58, 60, 62) movable along the strap.

3. A harness as claimed in any of the preceding claims, wherein said belly strap and said front strap are internally covered with a soft perspiration-allowing material.

4. A harness as claimed in any of the preceding claims, wherein said fixed spacing strap (64) is internally covered with a soft perspiration-allowing material.

## Patentansprüche

1. Führungsgurt für Tiere, welcher folgendes aufweist:
- einen Bauchgurt (42), der den Bauchbereich des Tieres umschließt,
- einen vorderen Gurt (44), der den vorderen Halsbereich umschließt, wobei die Enden des Bauchgurts (42) und des vorderen Gurts (44) durch seitliche Verbindungsmittel (46, 48) miteinander verbunden sind,
- ein Paar oberer Gurte (45, 47), die zum Verbinden der seitlichen Verbindungsmittel (46, 48) mit einem ersten und zweiten Abschnitt eines lösbaren Verschlussteils (50) zum Schließen des Führungsgurtes über dem Rücken des Tieres und mit mindestens einem Ring (52, 54) zum Anbringen einer Leine verbindbar sind,
**dadurch gekennzeichnet, dass** der Bauchgurt (42) und der vordere Gurt (44) an beiden Enden mit Mitteln zum Längeneinstellung versehen sind, mit welchen die Größe des Führungsgurts veränderbar und an Tiere verschiedener Größe anpassbar ist, und dass der Bauchgurt (42) und der vordere Gurt (44) an ihren Mittelabschnitten durch einen befestigten Abstandgurt miteinander verbunden sind.

2. Führungsgurt nach Anspruch 1, bei welchem in jedem Mittel zur Längeneinstellung der Gurt gleitend durch eine Öffnung in den entsprechenden seitlichen Verbindungsmitteln (46, 48) geführt ist und das freie Ende des Gurtes an einer entlang des Gurtes verlagerbaren Schnalle (56, 58, 60, 62) befestigt ist.

3. Führungsgurt nach einem der vorhergehenden Ansprüche, bei welchem der Bauchgurt und der vordere Gurt auf der Innenseite mit einem weichen atmungsaktiven Material überzogen sind.

4. Führungsgurt nach einem der vorhergehenden Ansprüche, bei welchem der befestigte Abstandsgurt (64) auf der Innenseite mit einem weichen atmungsaktiven Material überzogen ist.

## Revendications

1. Harnais pour animal du type comprenant :
une bride ventrale (42) entourant le ventre de l'animal,
une bride frontale (44) entourant la zone avant du cou, les extrémités desdites brides ventrale (42) et frontale (44) étant reliées entre elles par des moyens de jonction latéraux (46,48),
une paire de brides supérieures (45,47) adaptées pour relier lesdits moyens de jonction latéraux (46,48) avec une première et seconde parties d'une attache détachable (50) pour fermer le harnais par-dessus la partie postérieure de l'animal, et avec au moins un anneau (52,54) pour attacher une laisse,
**caractérisé en ce que** la bride ventrale (42) et la bride frontale (44) sont munies, aux deux extrémités, de moyens de réglage de la longueur pour faire varier la taille du harnais et l'ajuster aux animaux selon leurs différentes tailles, et **en ce que** ladite bride ventrale (42) et ladite bride frontale (44) sont reliées, au niveau de leurs parties centrales, par une bride d'écartement fixe (64).

2. Harnais selon la revendication 1 dans lequel, dans chaque moyen de réglage de la longueur, la bride passe à travers une ouverture par glissement, à l'intérieur des moyens de jonction latéraux correspondants (46,48) et l'extrémité libre de la bride est fixée à une boucle (56,58,60,62) déplaçable le long de la bride.

3. Harnais selon l'une quelconque des revendications précédentes dans lequel, ladite bride ventrale (42) et ladite bride frontale (44) sont recouvertes intérieurement d'un matériau mou permettant la transpiration.

4. Harnais selon l'une quelconque des revendications précédentes dans lequel, ladite bride d'écartement fixe (64) est recouverte intérieurement d'un matériau mou permettant la transpiration.
